# EUROPEAN PATENT APPLICATION

(11) **EP 0 858 827 A1**
(43) Date of publication of application: **19.08.1998**
(21) Application number: 96944146.8
(22) Date of filing: 02.09.1996
(51) Int. Cl.: B01D 63/02, B01D 53/00

(54) **MEMBRANE ELEMENT**

(71) Applicant: Tkachuk, Elena Nikanorovna, Moscow, 103473 (RU); Tkatchouk, Elena Valerievna, Moscow 103473 (RU)
(72) Inventor: Tkachuk, Elena Nikanorovna, Moscow, 103473 (RU); Tkatchouk, Elena Valerievna, Moscow 103473 (RU)
(74) Representative: Kiliaridis, Constantin
(86) International application number: RU9600248
(87) International publication number: WO9809719

(57) **Abstract**

Field of application: The invention relates to equipment used for separation of gas mixture, air, in particular, and can be used in chemical industry and medicine.

Subject of invention: It's membrane element for separation of air which consists of hollow polymeric fibres wound around metal basis in which the latter is accomplished as two truncated cones connected together by big bases on a single support bar which in its middle part has a disk of diameter of 4-6 diameters of support bar; moreover the said bar is wound with hollow fibres formed of mixture of poly-4-methylpentene-1 with different melt indexes.

## Description

### ART

This invention relates to equipment for separation of gas mixture, air, in particular, and can be used in chemical industry and medicine.

### Background of the Invention.

Known is arrangement with half-permeable membrane for gas separation. The arrangement enables to chance the mixture composition and comprises at least one sell of chambers separated with half-permeable membrane. The chambers are communicated in such way that mixture is running inside them countercurrently. The arrangement has a contrivance which create a pressure drop on either side of membrane. The arrangement has inlet and outlet for mixture with changed composition of components. The arrangement is used to enrich an air with oxygen. (FR, Application No. 2464088, B01D 53/00, published 1981)

The main deficiency of this arrangement is insufficiently high gas productivity that reduce its use efficiency.

Known is membrane element to separate gas or liquid mixture and apparatus based on such element. The apparatus has been accomplished as body furnished with cover, pipe connections for separating mixture to enter and leave and stack of membrane elements. Membrane elements consist of plane membrane and porous carrieers where each of them is accomplished as two plates being plane on one side and ribbed on the opposite one, moreover, turned with ribbed side opposite one another The stack of membrane elements is enclose in elastic jacket which tightly fits to the elements' surfaces. ( FR, Application No. 2511260, B01D 53/00, published 1983)

The main deficiency of this element is insufficient tightness of membranes' package and owing to this insufficiently high gas productivity.

Known is also membrane module of hollow fibres comprising at least one bundle of U-shaped hollow fibres, moreover, both ends of each fibres are sealed into filling mass, and open ends of hollow fibres get into outer face of filling mass. The module is characterised in such that each bundle of hollow fibres consists of partial bundles of different length. The hollow fibres, at least, in the region of semicircular bending, placed mostly in layers. At least two said partial bundles in this region are placed in another layer. The mentioned layers run on the whole in parallel to longitudinal axis of module. The longitudinal axis of layers and longitudinal axis of module coincide with on the whole. The layers in longitudinal direction from with each other an angle. (EP, Application No. 0371189, B01D 63/02, published 1990)

The main deficiency of this module is high pressure loss to gas flow occurred in the spot of fibres crossed over.

In order to provide more higher tightness of membrane package under low losses of flow, the permanent space of fibre membrane module is accomplished as longitudinal tube vessel with sleeve placed perpendicularly to longitudinal axis of vessel. Inside the sleeve the membrane cell is placed containing the bundle of hollow fibres the open ends of which are connected to the inlet and outlet of mixture tobe separated. ( DE, Patent No. 4039967, B01D 63/02, published 1992)

The main deficiency of this arrangement is high pressure loss in layer.

### Disclosure of Invention.

The task as a basis for creation of invention is to develop the construction of membrane element to be used for air separation which will provide high gas productivity under increased service life of element and small pressure loss in layer.

The task proposed is solved with membrane element to be used for air separation and consisting of hollow polymeric fibres wound around metal basis in which the latter is carried out as two truncated cones connected together by big bases on single support bar which is furnished in its middle part with disk of diameter of 4-6 diameters of support bar, and what's more, the support bar is wound with hollow fibres formed of the mixture of poly-4-methylpentene-1 that have different melt indexes. Moreover, according to this invention the support bar is wound with hollow fibres formed of the mixture of poly-4-methylpentene-1 with melt index being 100-180 g/10min taken in quantity of 75-95% mass and with melt index of 20-50 g/10min taken in quantity of 5-25% mass of fibre mass. The substance of invention is such that developed is original construction of membrane element to be used for air separation which consists of two truncated cones connected together by big bases mounted on a single support bar, in the middle part of support bar the metal disk of a certain size is fixed. The thickness of layer of fibres wound around membrane element will be decreasing in direction from smaller cone bases to big base, i.e. to the middle of element. Moreover, the resistance to discharging gas flow permeated into interfibres space will be lesser that finally causes the increase of specific productivity of membrane element and its service life.

According to data obtained during test of described construction, the specific productivity of gas increased by 10-14% as compared with test membrane element carried out as cylinder with wound hollow polymeric fibres on it and made of poly-4-methylpentene-1.

The size of a disk placed in the middle of support bar, has been determined experimentally, and its diameter is of 4-6 diameters of support bar and stipulated by the necessity to create optimal thickness of fibres' layer in the middle of membrane module in which gas flow faces minimum pressure loss.

According to invention proposed hereby, hollow polymeric fibres are winding around support bar. Hollow fibres bend around outer rim of a disk and form a space. Since the number of hollow fibres placed in cross-section of membrane element on a disk and in the region of elements' ends fixed by epoxy resin are equal, and the thickness of layer of fibres placed in these cross-sections is inversely proportional to square of diameters (owing to equality of surfaces), the thickness of fibres' layer on a dick will bee lesser than that in the region of epoxide block that provides minimum pressure loss of fibres' layer to gas flow.

The support bar is wound around by mixture of poly-4-methylpentene-1 having different indexes of melt flow, so called melt indexes which are as follows:
75-95% mass of polymer mixture is taken having melt index of 100-180 g/min;
5-25% mass of polymer mixture is taken having melt index of 20-50 g/10 min.

The mixture of these polymers is used to form hollow fibres to be wound.

Availability of mixture of polymers in fibre causes optimal viscosity characteristics of initial raw material and enables to eliminate structural defects of fibres produced and provides uniform thickness of fibres along the whole their length. Permeability of fibres produced is by 5-10% higher compared with known accounting same selectivity of gas separation.

Use of membrane element described above and winding of polymeric fibre of composition indicated above gives the opportunity to increase considerably the gas productivity of element by 15-20% in particular.

This advantage enables, moreover, to increase the service life providing hypoxic gas mixture consumption with reduced oxygen content of more than 60 l/min that increases the practical possibility of element to be used.

### Brief Description of the Drawing.

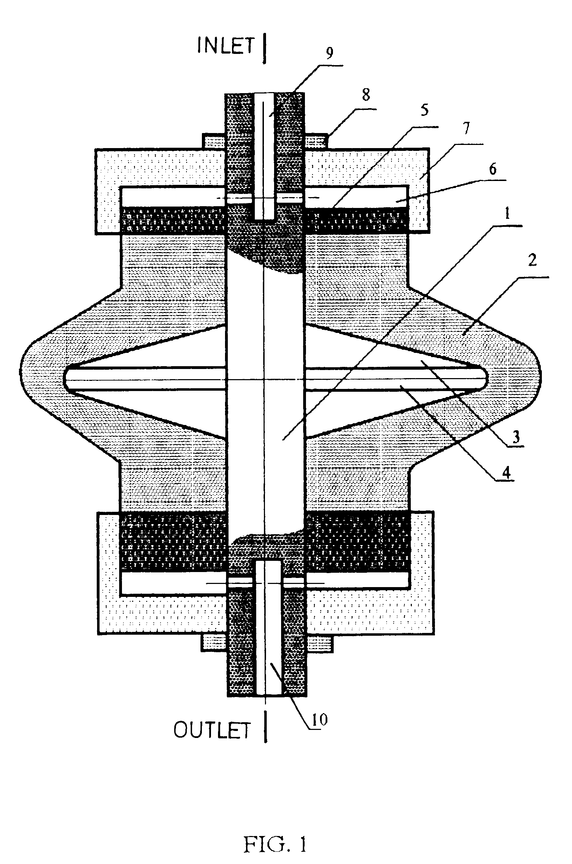

**Fig.1** shows membrane element frontal view in section.

### The Best Version of Embodiment of the Invention.

Membrane element shown in **Fig.1** consists of bar **1**, layer of hollow polymeric fibres **2**, space **3**, disk **4**, epoxide block **5**, sealed chambers **6**, covers **7**, nuts **8**, inlet gas channel **9** and outlet gas channel **10**.

Capacity of invention to be realized is confirmed by following concrete Examples.

### Example 1

Membrane element shown in Fig.1 is accomplished as follows: Bar 1, with disk 4 placed on it, is fixed into fastening of winding machine and started rotating. In parallel to bar 1 the placer through the holes of which running hollow polymeric fibres fixed to rotating bar, is accomplishing reciprocating motor. Fibres are reeling out from bobbins. In such a way the cross-shaped placing of hollow fibres' bundle 2 around bar of membrane element 1 is carried out; moreover, the angle between the coils of fibres' bundle running there and back is kept to be 90 degree. Simultaneous to winding of layer of hollow fibres 2, the epoxide block 5 are formed. For this purpose the epoxide compound is continuously applied to the ends of winding membrane element and rolling down of these spots facilitates impregnation of interfibres' space and cementing of fibres together. When winding the hollow fibres 2 bend around outer rim of disk 4 forming a space 3. After winding required numbers of hollow fibres 2 and full hardening of epoxide compound in block 5, cut of the fibres of element's ends is carried out, moreover, the channels of hollow fibres are opened, then covers 7 are placed on the element ends and tightened with nuts 8. As a result two sealed chambers 6 at inlet and outlet of element are formed.

### Example 2.

Membrane module works as follows: Compressed air from compressor is supplied to one of the sealed chamber 6 via inlet gas channel 19 from which it reaches channels hollow fibres 2 based on poly-4-methylpentone-1. Running along said channels the air is separated and depleted in terms of oxygen which penetrates throughout the fibres' walls reaching interfibres space and then environment. Nitrogenated air leaves fibre channel at the opposite end of element and enters the second sealed chamber 6 and further being directed to the consumer.

### Industrial Practicability

Use of membrane element enables to provide the advantages as follows:
- increased by 15-20% gas productivity of element as compared with known;
- higher service life of element with its reliability and easy to assemble and operate.

## Claims

1. Membrane element for separation of air which consists of hollow polymeric fibres wound around metal basis and distinguished in such that the basis has been accomplished as two truncated cones connected together by big bases on a single support bar which in its middle part has a disk of diameter that equals 4-6 diameters of support bar; moreover the latter is wound by hollow fibres formed of mixture of poly-4-methylpentene-1 that have different melt indexes.

2. Membrane element for separation of air according to item 1, and distinguished in such that support bar which is wound around with hollow fibres formed of mixture of poly-4-methylpentene - 1 with melt index being 100-180 l/10min taken in quantity of 75-95% mass and with melt index being 20-50 g/10min taken in quantity of 5-25% mass of fibre mass.
